# EUROPEAN PATENT APPLICATION

(11) **EP 1 453 224 A2**
(43) Date of publication of application: **01.09.2004**
(21) Application number: 04250621.2
(22) Date of filing: 05.02.2004
(51) Int. Cl.: H04B 7/08

(54) **Signal processing apparatus and method for diversity reception communication systems**

(30) Priority: 27.02.2003 GB 0304496
(71) Applicant: Kabushiki Kaisha Toshiba, Tokyo 105-8001 (JP)
(72) Inventor: Fitton, Michael P. c/o Toshiba Research Europe Ltd, Bristol BS1 4ND (GB); Leong, Siew Chung c/o Toshiba Research Europe Ltd, Bristol BS1 4ND (GB)
(74) Representative: Midgley, Jonathan Lee

(57) **Abstract**

This invention is generally concerned with apparatus and methods for signal processing, and more particularly with improved techniques for diversity reception in communication systems.

An antenna branch selector (800) for selecting for processing at least one of a plurality of antenna branches (802) each coupled to a respective receive antenna and carrying a received signal, said antenna branch selector comprising a signal selector (804) having a plurality of inputs to receive signals from said plurality of antenna branches and having an output to output a selected signal for processing a time-to-frequency domain converter (810) configured to receive a time domain signal from each of said antenna branches and to provide a corresponding frequency domain output signal; and a controller (820) coupled to said time-to-frequency domain converter and to said signal selector to control said signal selector to select a said antenna branch responsive to said frequency domain output signal.

## Description

This invention is generally concerned with apparatus and methods for signal processing, and more particularly with improved techniques for diversity reception in communication systems.

A generalised communications system comprises a receiver receiving signals transmitted from a transmitter through a channel between the transmitter and receiver. The transmitted signal passing through the channel may experience interference and temporal variations which cause the signal to vary in both amplitude and phase. More particularly a channel between a transmitter and a receiver may comprise multiple paths such as a direct path and a path comprising one or more reflections. Portions of a signal travelling over a longer, indirect path arrive later than those travelling over a direct path causing intersymbol interference (ISI). In the frequency domain this gives rise to multi path fading, the signals arriving at the receiver along different paths interfering with one another. Typically multi path fading produces a comb-like frequency response. Generally intersymbol interference becomes worse as the data rate increases since shorter time differences between paths are then able to cause energy associated with one transmitted bit arriving when another bit is expected. Intersymbol interference and multi path fading is also accentuated when either or both of the transmitter and receiver are moving.

There are many techniques which can be used to mitigate the effects of fading/ISI, some relatively simple and some very complex. One commonly employed technique is to use multiple antennas at the transmitter and/or receiver to increase the mean signal-to-noise ratio (SNR) and to reduce the standard deviation of channel fading. Thus, for example, a transmitter with a single antenna may be used with a receiver with a plurality of receive antennas, the general idea being to obtain at least partially independent fading signal from each receive antenna so that when one antenna experiences a fade another antenna still has adequate received signal strength. However as will be shown later, selecting antennas based upon received signal strength does little to mitigate the effects of ISI in a practical system.

A theoretically optimal technique for combining the signals from a plurality of receive antennas is maximal ratio combining (MRC) which, in effect, employs a separate receiver for each antenna (including equalisation), then constructing a linear weighted combination of the received signals. A slightly simpler technique, equal gain combining (EGC) omits the antenna weighting. However both these techniques are relatively complicated and expensive to implement and therefore unsuitable for cost and/or power consumption-sensitive applications.

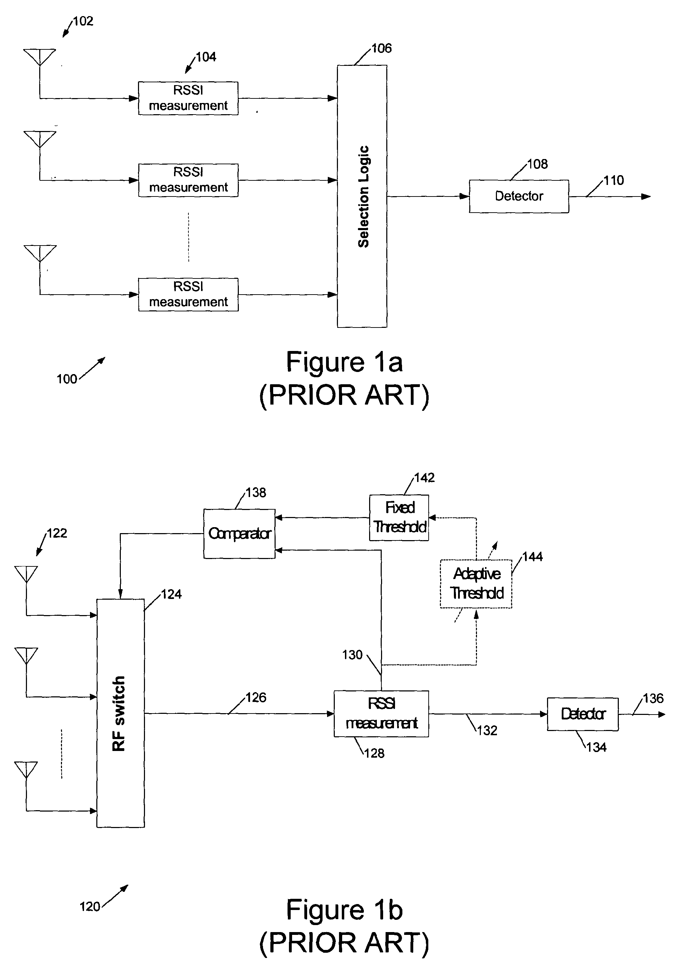

A simpler set of techniques is broadly known under the heading "Selection Diversity", the principle here being to select an antenna relatively close to the front end of a receiver to reduce the duplication of circuitry. Figure 1a shows, in outline, a traditional selection diversity receiver 100 comprising a plurality of receive antennas 102 and a corresponding plurality of receiver circuits 104 each configured to make a received signal strength indication (RSSI) measurement for the antenna to which it is connected. The output of each of these circuits 104 comprises both RSSI measurement data and received signal information, and selection logic 106 selects one of the received signals on the basis of the RSSI measurements for provision to a detector 108 which demodulates the received signal to provide a baseband output 110. Selection logic 106 generally operates to provide the received signal with the largest received signal strength to the detector/demodulator 108.

This idea is taken one step further in a so-called switch diversity circuit in which a signal from an antenna is selected before a measurement is made. Figure 1b shows an example of such a circuit 120, in which a plurality of receive antennas 122 provide respective signals to an RF switch 124, optionally with some pre-processing (not shown), which in turn provides a selected output 126 to an RSSI measurement circuit 128. RSSI measurement circuit 128 provides an RSSI measurement output 130 and a received signal output 132 to a detector/demodulator 134, which in turn provides a baseband output 136. The RSSI measurement output 130 is provided to a comparator 138 which has an output 140 controlling RF switch 124 to selectively provide a signal from one of antennas 122 to output 126.

Generally, in operation, if the signals from a selected antenna falls below a threshold signal strength the circuit will switch to an alternative antenna. However in a simple circuit this switching is performed blindly since no monitoring of the signal strength of the alternative antennas is performed. To reduce the number of signal switching discontinuities some historesis may be built into the scission process, for example by modifying the switching threshold.

Referring again to figure 1b, the threshold RSSI for switching may either be a fixed or predetermined threshold 142 or an adaptative threshold 144 may be applied. For example in adaptive threshold switching the threshold may be time averaged from previous RSSI measurements so that the threshold varies according to the RF environment. Such an adaptive threshold can have the effect that the circuit attempts to switch to an antenna providing a higher RSSI just before a fade occurs.

A number of different switching strategies may be implemented using the circuit 120 of figure 1b. According to one strategy when the signal from a selected antenna drops below the threshold the circuit (or system) switches to the strongest of the other signals, this facilitating a rapid return from a fade. According to another strategy when the strength of the selected signal falls below the threshold the system will switch to another antenna, but only if a signal from at least one of the antennas exceeds the threshold level. This strategy gives rise to fewer switching discontinuities but is also slower to return from a fade.

The above described switch and selection diversity arrangements are well suited to low cost, low power implementations and are potentially useful, therefore, for consumer orientated applications such as Bluetooth (trademark). However as Bluetooth is a relatively high data rate system the simple diversity technique described above, based upon RSSI, are of only limited assistance since the dominant cause of bit errors is often intersymbol interference rather than an inherently low received signal strength.

According a first aspect of the first invention there is therefore provided an antenna branch selector for selecting for processing at least one of a plurality of antenna branches each coupled to a respective receive antenna and carrying a received signal, said antenna branch selector comprising: a signal selector having a plurality of inputs to receive signals from said plurality of antenna branches and having an output to output a selected signal for processing; a time-to-frequency domain converter configured to receive a time domain signal from each of said antenna branches and to provide a corresponding frequency domain output signal; and a controller coupled to said time-to-frequency domain converter and to said signal selector to control said signal selector to select a said antenna branch responsive to said frequency domain output signal.

Operating in the frequency domain rather than in the time domain allows selection based upon multi path fading and intersymbol interference rather than upon received signal strength alone and this, in turn, helps reduce the number of bit (or symbol) errors, particularly in a high data rate system. The time-to-frequency converter may have an input from each of the antenna branches, that is from a signal chain from each of the antennas, analogously to a selection diversity system, or a single converter may be shared between a plurality of antenna branches along the lines of a switched diversity system, or a hybrid arrangement may be employed. Preferably the time-to-frequency domain converter comprises a Fourier Transform device, most preferably a Fast Fourier Transform (FFT) device. The frequency domain output signal may comprise, for example, a signal giving an indication of the power or energy of a received signal over a frequency range or bin. However in other embodiments the time-to-frequency domain converter may simply comprise a plurality of bandpass filters since, in embodiments, only a relatively coarse frequency resolution is needed.

Preferably the controller compares the received signal levels at two frequencies of the received signal to determine indication of the degree of frequency-selective fading, or equivalently multi path distortion or intersymbol interference, and then selects a signal of one of the antenna branches accordingly. Thus, for example, the signal with the least fading may be selected or, alternatively, a selected antenna branch may be deselected when the degree of fading is greater than a threshold value. It will be appreciated that many switching schemes are possible and that, broadly speaking, any of the prior art are RSSI-based switching schemes may be employed with the substitution of small fading for large RSSI as a selection (or deselection) criterion.

In preferred embodiments the two frequencies at which the received signal level is compared, in the frequency domain, comprise two tones within the received signal. This may arise, for example, when the received signal comprises a packet data signal including a preamble signal portion. Such a preamble generally comprises a predetermined bit or symbol pattern thus giving rise to an expected set of tones in the frequency domain. However other parts of a packet data signal may also be employed, in particular where these again might be expected to give rise to tones at known frequencies.

In a particularly preferred embodiment the packet data signal comprises a Bluetooth (trademark) packet data signal that is a signal conforming to one or more versions of the Bluetooth specification, such as Bluetooth Version 1.0, Version 1.2, Version 2.0 (or later) or the set of standards known as High Rate Bluetooth (or sometimes Bluetooth High Rate), or compatible US-defined standards such as a standard in the IEEE 802.15.3 series.

The difference in signal level at two frequencies corresponding to two tones of the received signal may be directly compared with a threshold level (fixed or active) to select an antenna branch but preferably selection of an antenna branch is responsive to a comparison between such a difference measured or one antenna and that for another antenna. By comparing antennas against one another in general fewer good packets and more bad packets (in a packet data system) will be rejected.

The decision as to which antenna branch to select need not be exclusively based on a difference in signal level of two tones within the received signal. For example, the variation in (expected) level at more than two frequencies could be determined to determine relative signal levels of two or more pairs of tones, or to measure an overall received level analogous to the RSSI, and/or to determine a measure of signal to noise/interference for an antenna. Thus, for example, a sum of signal levels at frequencies of tones within the received signal may be employed to determine an indication of overall received power for an antenna. Similarly a ratio of signal level at one or more frequencies of tones within the received signal to one or more frequencies at which low tones are expected may be employed to provide an indication of SNR. Total received power and/or SNR may be employed to weight a multi path fading measure when selecting an antenna or, for example, selection of an antenna branch may be conditional upon a minimum received signal level and/or a minimum SNR. The skilled person will appreciate that many variations along these lines are possible. In a preferred embodiment signal strength and SNR values may be derived from the frequency domain signal, but in other embodiments conventionally derived SNR and/or RSSI values may be employed, for example taken from outputs from an RF stage receiver system including the antenna branch selector.

In a packet data communication system it is generally preferable to select an antenna branch during a preamble portion of a packet to avoid discontinuities during reception of the remainder of the packet payload (here "payload" is used generally to include header and other data as well as payload data *per se).* However where multi path is a particular problem, for example where one of the transmitter and receiver is moving quickly, the bit error rate may be high enough to justify switching antennas during reception of the packet payload. Such a switch is therefore preferably dependent upon observation of a minimum frequency offset or Doppler frequency for the received signal, and preferably also dependent upon signal quality measure being less than a threshold value. Although, in preferred embodiments, the above described frequency domain antenna branch selector is employed to make an initial determination of an antenna branch in such a procedure, it is not essential for the above described frequency domain techniques to be employed.

Therefore in another aspect the invention provides a system for selecting a received signal from an antenna of an antenna system comprising a plurality of antennas, said received signal comprising a packet data signal including preamble and payload signal portions, the system comprising: means for a received signal parameter measured during said preamble signal; means for determining a Doppler frequency change of said received signal; and means for reselecting said received signal during said payload signal conditioned upon said determined frequency change being greater than a threshold frequency change.

In such a system the threshold frequency change for triggering a reselection of an antenna branch may be variable and dependent upon the length or duration of a data packet. This is because relatively larger degrees of Doppler shift, that is a relatively more rapidly changing channel, is needed to change an antenna preference during reception of a packet when a packet has a short duration. Where channel equalisation is applied it is preferable to reset, or predetermine, or cease the channel equalisation when switching from one antenna to another during reception of a packet payload.

In another aspect the invention provides method of selecting a received signal from an antenna of antenna system comprising a plurality of antennas, the method comprising: transforming a received signal from each said antenna from the time domain to the frequency domain; determining a measure of multi path fading for the signal from each said antenna from said frequency domain transformed signal; and selecting a received signal responsive to a said determined measure of multi path fading.

The invention further provides a method of selecting a received signal from an antenna of an antenna system comprising a plurality of antennas; said received signal comprising a packet data signal including preamble and payload signal portions, the method comprising: a received signal parameter measured during said preamble signal; determining a Doppler frequency change of said received signal; and means for reselecting said received signal during said payload signal conditioned upon said determined frequency change being greater than a threshold frequency change.

The skilled person will appreciate that the above described apparatus and methods may be permitted using either analogue or digital circuitry or both. In particular it is commonplace for many receiver signal processor functions to be implemented using a processor such as a digital signal processor, and thus the invention further provides processor control code configured to implement the above described apparatus and methods, for example on a carrier medium such as a disk, CD or DVD ROM, or programmed memory such as read-only memory (firmware) or on an optical or electrical signal carrier. Embodiments of the invention may also be implemented using an application specific integrated circuit (ASIC) or field programmable gate array (FPGA). Thus such code may also comprise code for setting up or controlling such a device. Similarly the code may comprise code for a hardware description language such as Verilog (trademark), VHDL (Very High Speed Integrated Circuit Hardware Description Language) or System C. As the skilled person will appreciate where implemented or partially implemented using processor control code such code may be distributed between a plurality of coupled components in communication with one another.

These and other aspects of the invention will now be further described, by way of example only, with reference to the accompanying figures in which:
Figures 1 a - 1f show, respectively, a selection diversity receiver system, a switched diversity receiver system, an exemplary Bluetooth application, an outline block diagram, a Bluetooth receiver, the structure of an unmodulated uuencoded high rate Bluetooth data packet, and a Bluetooth packet segment;
Figure 2 illustrates a decision making process in an RSSI-based two antenna branch selection diversity circuit;
Figures 3a and 3b show, respectively, a DBPSK IQ constellation, and I and Q signals for a preamble sequence of a Bluetooth data packet;
Figure 4 shows a preamble sequence of a Bluetooth data packet in the time domain and in the frequency domain, as received over an ideal channel with no fading;
Figure 5 shows a conceptual diagram of a dual receive antenna frequency domain switched diversity communications system;
Figures 6a and 6b show vast Fourier transform energy spectra for a Bluetooth data packet preamble sequence received by first and second antennas respectively of a dual receive antenna diversity receiver;
Figures 7a and 7b show constellation diagrams for the spectra of figures 6a and 6b respectively;
Figures 8a and 8b show, respectively, an FFT- based receive antenna branch selection system, and a radio frequency switch for the system of figure 8a;
Figure 9 shows a flow diagram illustrating operation of a system as shown in figure 8a;
Figures 10a and 10b show Bluetooth preamble sampling arrangements for two and three receive antenna systems respectively;
Figure 11 shows an FFT-based selection diversity receiver system;
Figures 12a and 12b show, respectively, a dual antenna branch packet data diversity receiver system, and a flow diagram illustrating operation of the receiver system of figure 12a;
Figure 13 shows bit error rate performance of a receiver including an FFT-based antenna branch selector;
Figures 14a and 14b show, respectively, graphs of bit error rate against difference in energy at frequencies of two tones and bit error rate against received signal strength in frequency domain-based and signal-strength based dual branch diversity receivers receiving Bluetooth packet data; and
Figure 15 shows cumulative probabilities of identifying good and bad packets respectively as a function of difference in signal level between tones of a Bluetooth packet data preamble.

For convenience embodiments of the invention will be described with reference to High Rate Bluetooth but the skilled person will understand that applications of the invention are not limited to this standard, but may be employed in other packet data systems and, more generally in other RFdata communications systems.

The Bluetooth group of standards, such as Bluetooth 1.0, 1.2 and 2.0, is concerned with short range (up to around 10 metres) RF transmission as a replacement for cables, for example in personal area networks (PANs). The basic standard provides a frequency hopping spread spectrum (FHSS) link operating at 0.7 Mbps (V 1.1) or 10 Mbps (V 1.2). High rate Bluetooth operates at speeds of > 10 Mbps and is associated with the IEEE 802.15 group of standards, in particular IEEE 802.15.3.

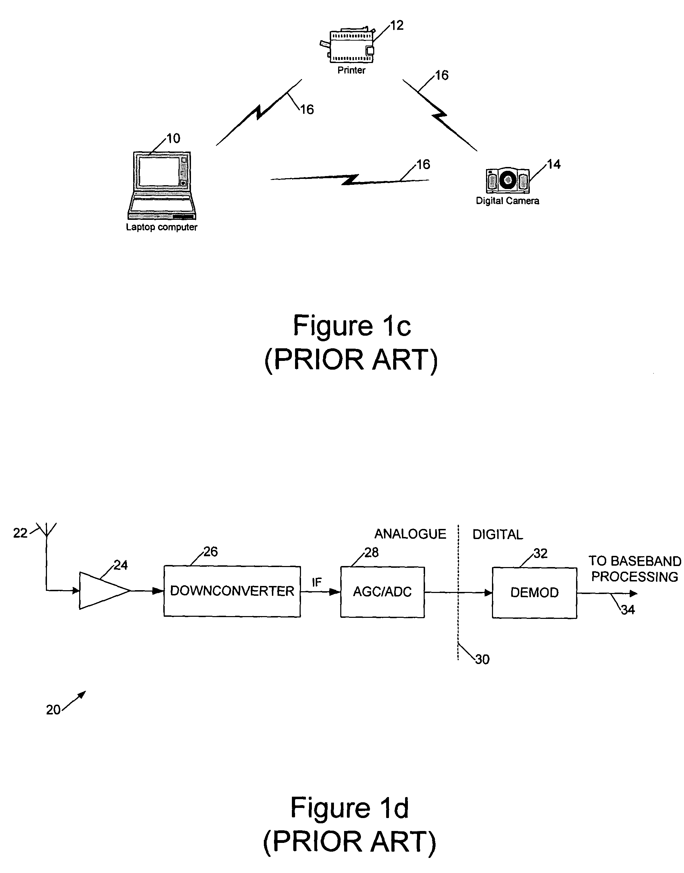

Figure 1c shows the Bluetooth concept in which a computer 10, printer 12, and camera 14 are all in communication with one another by means of bi-directional Bluetooth radio links 16. Bluetooth can also be used for wireless connections to high speed voice/data access points.

Figure 1d shows an outline block diagram of an exemplary Bluetooth receiver 20. The receiver comprises a transmit/receive antenna 22 coupled to pre-amplifier 24 and down converter 26 providing an IF (Intermediate Frequency) output to an AGC (Automatic Gain Control) and analogue-to-digital conversion (ADC) block 28. Further processing then takes place in the digital domain, to the right of dashed line 30, the output from ADC 28 being provided to a digital demodulator 32 which in turn provides a baseband output 34 for further processing by a Bluetooth baseband controller (not shown). The skilled person will understand that the point at which the received signal is digitised is to a degree a matter of choice depending on, among other factors, cost and power requirements.

Demodulator 32 typically comprises synchronisation means for synchronising to received data symbols (which may be sampled at less than the symbol interval), an equaliser, for example based on sequence estimation using Maximum Likelihood Sequence Estimation, and an error-checker/corrector. The Bluetooth receiver 20 is typically part of a Bluetooth transceiver and a transmitter and transmit/receive switch (not shown in Figure 1d) are generally also coupled to antenna 22 to allow either transmission or reception of data.

Figure 1e shows the general format of a high-rate Bluetooth data packet 50. The packet has five fields, a 9 byte preamble field 52 a 2 byte synchronisation word 54, and 11 byte header 56, a payload 58 comprising up to 4095 bytes of user data, and a trailer field 60 of either 2, 4 or 6 bits. The header field 56 contains all the address information for the packet and some additional control information. The payload 58 comprises user information and when the payload is sufficiently large it may be sub-divided into segments 58a-d.

All the segments and the header have cyclic redundancy codes (CRCs) for error-detection. The preamble 52, sync word 54 and header 56 are all modulated using DBPSK (Differential Binary Phase Shipped Keying); the modulation format of the payload is indicated in the header and is one of DBPSK, DQPSK (Differential Quadrature Phase Shift Keying), and 8-DPSK. These modulation schemes applying, respectively, rotations of π/2, π/4 and π/8 when a new symbol is transmitted. The trailer is modulated in the same format as the payload and, in the absence of a payload, the trailer is modulated in the same format as the header, that is DBPSK. The preamble 52, sync 54, header 56 and payload 58 fields are described in more detail below.

The preamble 52 comprises a 72-bit sequence obtained by repeating the 8-bit sequence: 0 0 0 0 1 1 1 1, nine times. The preamble is intended for use in supporting antenna diversity and AGC (Automatic Gain Control) training.

The sync word 54 comprises a 16-bit sequence, used for frame synchronisation, having a high auto-correlation coefficient. The sequence is: 0 0 0 0 0 0 1 0 0 1 1 1 0 1 0 1.

The header field 56 contains address and control information and has its own 24-bit CRC, the total length of the header including the CRC being 88 bits. The header fields, their size in bits, and their meaning is given in Table 1 below:

**Table 1**

| **Field** | **Size** | **Meaning** |
|---|---|---|
| HR_ID | 8 | High Rate channel ID |
| DP_ADDR | 8 | Destination Point Address |
| SP_ADDR | 8 | Source Point Address |
| MOD_TYPE | 2 | Modulation Type |
| XTD_HDR | 2 | Extended Header |
| P_L | 12 | Payload Length in Bytes |
| FEC_ON | 1 | Forward Error Correction |
| Reserved | 1 | For future use |
| Flow | 1 | Flow Control |
| PKT_SAR | 2 | Packet Segmentation and Re-assembly |
| PLD_MN | 1 | Payload Message Number |
| ARQ_MN | 1 | Arq Message Number |
| ACK_REQ | 1 | Request Acknowledgement |
| RN | 8 | Request Number |
| SN_BM | 8 | Segment Error Bitmap |
| H_CRC | 24 | Header CRC |

Field HR_ID (8 bits) is a high-rate channel identification field used to distinguish between transmissions of different high-rate networks occupying the high-rate RF channel. Since a transceiver can only belong to only one high-rate network it will only accept packets that have the same fixed HR_ID. A Bluetooth device may comprise several transceivers each associated with a different HR link.

The DP_ADDR field (8 bits) defines a destination point address. Each device participating in a Bluetooth high-rate link may have a number of "logical points". One Bluetooth high-rate device may send information to a specific "logical point" on another device via the basic physical medium. The DP_ADDR field in the packet header indicates which logical point on the receiving device the packet is testing for. In general, a single high-rate unit will be assigned multiple logical point addresses. The high-rate units are therefore able to accept the received packets intended for multiple destination point addresses.

The H_CRC field (24 bits) is the header CRC, a cyclic redundancy check for detecting errors in the header.

Referring now to the payload field 58, the amount of user payload data that can be transmitted in a single packet is between 0 and 4095 bytes. If the amount of data to be transmitted within the packet is greater than 128 bytes then the data is split into one or more segments which are transmitted sequentially within the payload section of the packet 50.

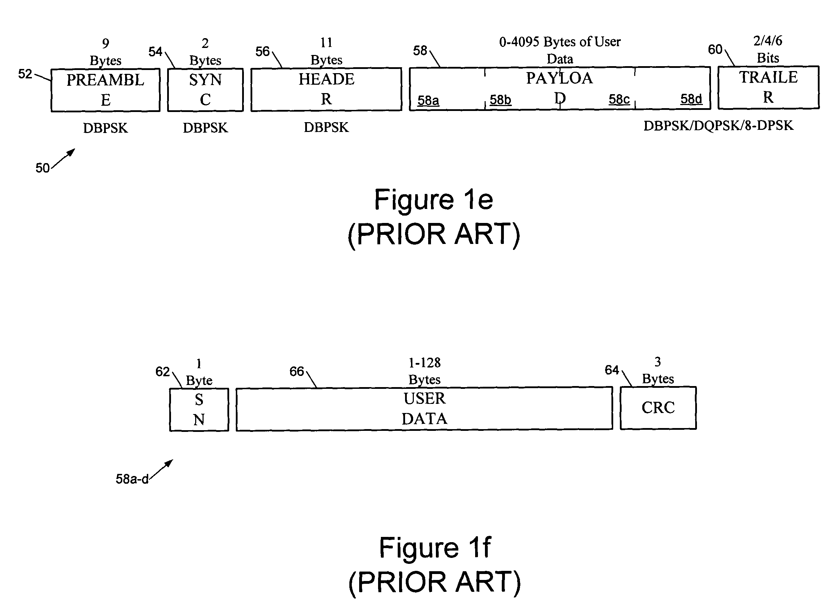

Figure 1f shows the format of a Bluetooth packet segment such as one of segments 58a-d. Each segment is numbered with 1 byte (8-bit) sequence number SN62 and has a 3 byte (24-bit) CRC64 to detect errors. The sequence number 62 and CRC 64 sandwich a user data field 66 containing 128 bytes (1024 bits) per segment. The last segment of the payload 58, in the illustrated example segment 58d, may be partially filled with user information, that is may hold between 1 and 128 bytes.

Referring again to the above described switched and selection diversity circuits, in the context of a Bluetooth High Rate (trademark) communications system, if the channel between transmitter and receiver is relatively stationary over the period of interest, that is over the duration of a packet, and if there is a preamble on which to perform measurements, as described above, then preamble based switched or selection diversity may be implemented. With this approach during the preamble part of the data packet all of the antennas are measured, in a switched diversity circuit in turn by a single measurement unit. In a switched diversity circuit the time to switch from one antenna to the next and the measurement of that time must therefore be sufficiently short for all of the antennas to be monitored during the preamble. Since a channel is likely to be stationary over the duration of a packet an antenna selected during the preamble sequence is also likely to be suitable for receiving the rest of the data packet.

In preamble based switched, selection diversity using RSSI measurements, the RSSI measurements may be based upon the mean power level of the received envelopes from each antenna branch measured for a period of the preamble in each packet. Generally the branch with the highest mean power level is selected, and the performance is then found to be equivalent to that based upon a measurement across the whole packet, provided that the packet remains static throughout the packet duration. A branch may be selected immediately after the preamble so that the payload may be received using the optimal antenna.

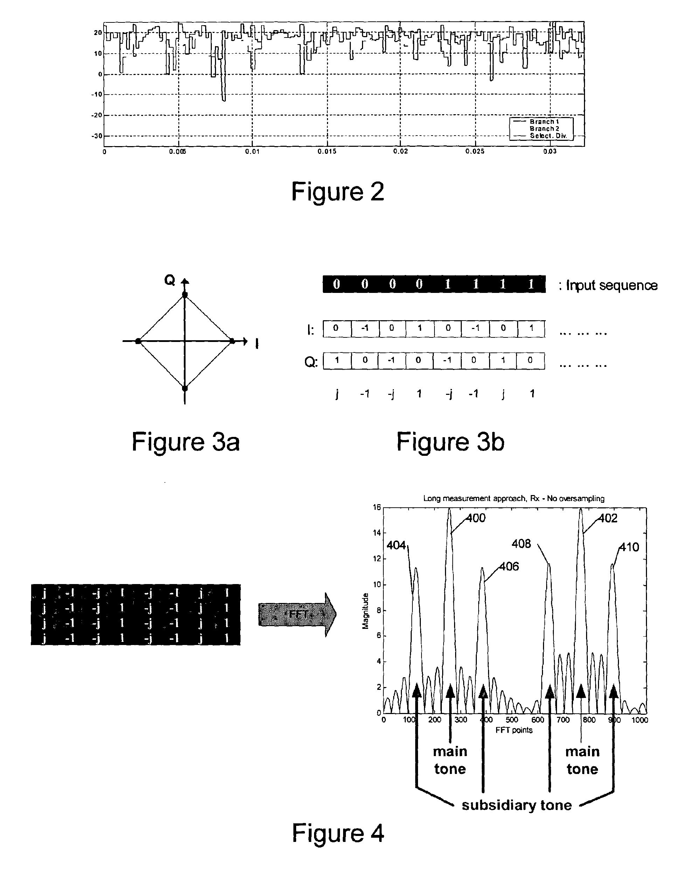

Figure 2 shows an example of a decision making process for an RSSI based dual branch selection diversity circuit, in which the uppermost curve indicates the output of the selection circuit and two lower curves indicate received power levels on the two branches from which the selection is made. As can be seen, at different times one branch is likely to have a higher received signal strength than the other antenna branch. Based upon the measured mean power of the received preamble (in this RSSI-based scheme) the selection diversity circuit switches to the branch with the highest received power. However this approach does not properly take into account the effect of interference, which increases the received signal strength making a branch look better when it is actually worse, and moreover does not include the effects of intersymbol interference (ISI), as described above.

Referring now in more detail to the example of a Bluetooth High Rate preamble, this preamble comprises a repeated series of four zeros (0000) and then four ones (1111) each representing a bit or symbol (in the case of BPSK one bit per symbol), up to 72 symbols. In the example of DBPSK the preamble is modulated by π/2, for example a "1" resulting in a plus π/2 rotation and a "0" resulting in a minus π/2 rotation. Figure 3a shows a modulated IQ constellation for such an input sequence, a portion of this input sequence and corresponding I and Q values being shown in figure 3b.

Figure 4 shows a set of 32 (context) modulation symbols for such a Bluetooth high rate preamble, and their corresponding fast Fourier transform (FFT) energy spectrum, using a 1024.FFD. As can be seen from figure 4 the phase rotation in the transmitted symbol appears as a positive and negative frequency translation with respect to the carrier frequency.

Referring in more detail to the spectrum of figure 4, two main tones 400, 402 can be observed, corresponding to a positive frequency increment of f_{b}/4 with respect to the carrier and a similar negative increment of f_{b}/4, where f_{b} is the symbol rate of high rate Bluetooth, that is for MHz. Also present are four subsidiary tones 404, 406, 408, 410 which correspond to the additional modulation of the alternating four zeros (0000), four ones (1111) sequence.

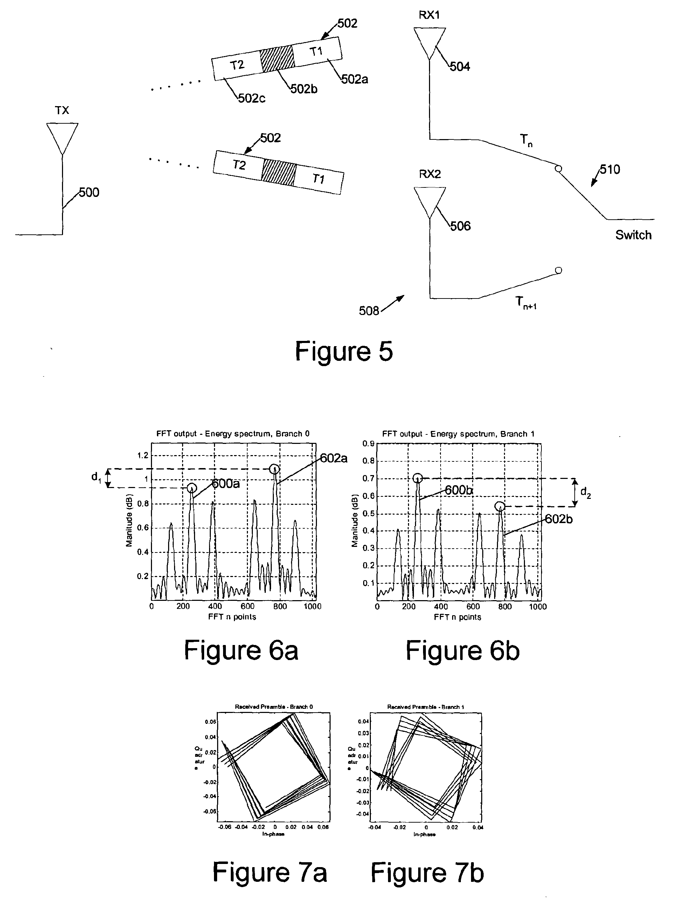

Referring now to figure 5, this shows a conceptual diagram of a dual receiver antenna switched diversity receiver operating in the frequency domain as described further below. A transmit antenna 500 transmits a single preamble sequence 502 which is observed by first and second receiver antennas 504, 506 of a dual-antenna receiver 508. The receiver 508 includes a switch 510 to selectively provide the signal from one or other of antennas 504, 506 for received signal processing. The preamble sequence is divided into three portions, an initial time portion T1 502a, a switching time portion (shaded) 502b, and a second time portion T2 502c. At the receiver 508 portion 502a is received antenna RX1 504 and the receiver then switches to receiver RX2 506 to receive a subsequent part of the preamble 502c for the duration of T2. In this way the entire preamble is received and during reception of each part of the preamble measurement and analysis is performed in the frequency domain, and an antenna branch is then selected based upon the output from this analysis. If desired, averaging methods over a signal or over multiple packets may be employed following the measurement process.

Here we describe an approach which performs a fast Fourier transform on the received complex high rate Bluetooth preamble sequence, to allow a decision to be made to determine the best antenna branch based upon information in the frequency domains. In particular the decision for selecting the best antenna branch is preferably based upon a difference in magnitude of peaks corresponding to main (or subsidiary) tones of the preamble, thus incorporating the effects of frequency selective fading, which is the frequency domain representation of multi path time dispersion. If desired other factors may also be included in the decision metric such as noise, interference, and absolute signal level. The receiver thus, in effect, tracks the gap between these peaks as the channel profile changes. We further describe an extension to the technique which supports switching diversity when channels variations across the duration of a packet are large.

Referring now to figure 6a and 6b, these show energy spectra for signals received at two different antennas of a dual antenna branch diversity receiver in the presence of channel noise and fading. The spectra of figures 6a and 6b were generated by taking 1024 point FFTs of the antenna branch signals prior to the receiver detector/modulator. The two main tones of figure 6a are labelled 600a, 602a, and those of figure 6b 600b and 602b. It can be seen, by comparison with figure 4, that the relative strengths of the main and subsidiary tones is altered by the channel fading and, moreover, is different for the signals received by the first and second antennas to the receiver. The difference between the levels of the peaks above and below the carrier frequency (for either the main tone or the subsidiary tones) can be used as an indication of the degree of multi path distortion. Thus in figures 6a and 6b difference d₁ corresponds to the difference in signal level between main tones 600a, 602a and difference d₂ corresponds to the difference in the signal level between 600b and 602b. It can be seen that different d₂ is larger than difference d₁, implying that the signal which has the spectra of figure 6b has suffered more multi path distortion than that of figure 6a. Thus, in the example of figure 6, the signal with the FFT spectrum corresponding to figure 6a should be selected since this exhibits the least fading and hence should experience the least ISI.

Figures 7a and 7b show constellation diagram corresponding to the signals having the spectra of figure 6a and 6b respectively, illustrating the effects of not fading. In particular the constellations of figure 7, for a high rate Bluetooth preamble, are rotated clockwise and counter-clockwise by channel fading.

For the purposes of illustration figures 6a and 6b show a 1024 point FFT, but in practice is unnecessarily complex and the required information may be derived, for example, from a FFT with fewer points. In particular in table 1 below, shows how an eight point FFT may be applied to an antenna selection diversity system for a high rate Bluetooth preamble, showing which FFT bins are assigned to which tone or other frequencies.

**Table 2**

| **FFT point** | **Description** | **Used for** |
|---|---|---|
| 0 | Lowest/highest frequency (±4MHz) | Shows the noise and interference as no signal present in this bin |
| 1 | Lower subsidiary tone | |
| 2 | Lower main tone | The difference from bin 6 will give an indication of frequency selectivity of the channel (d₁ and d₂ for antennas 1 and 2 respectively) |
| 3 | Lower subsidiary tone | |
| 4 | Centre frequency | Shows the noise and interference as no signal present in this bin |
| 5 | Upper subsidiary tone | |
| 6 | Upper main tone | The difference from bin 2 will give an indication of frequency selectivity of the channel (d₁ and d₂ for antennas 1 and 2 respectively) |
| 7 | Upper subsidiary tone | |

It can be seen that FFT points or bins zero and four provide an indication of the noise and interference level as no signal is expected to be present at these frequencies. Furthermore a sum (or average) of bins two and six, or alternatively bins one, two, five, six and seven, will provide a relative indication of received power for an antenna. A ratio of this received power indication to the noise and interference level may be used to determine a signal-to-noise ratio. In this way the measure of channel fading may be combined with a signal strength and/or SNR value derived from the FFT data, for example to weight the decision metric or make switching conditional upon a minimum received power or SNR. (For example in the case of Bluetooth 9.2dB for π/2BPSK, 13.9dB for DQPSK and 19.5dB for 8PSK)

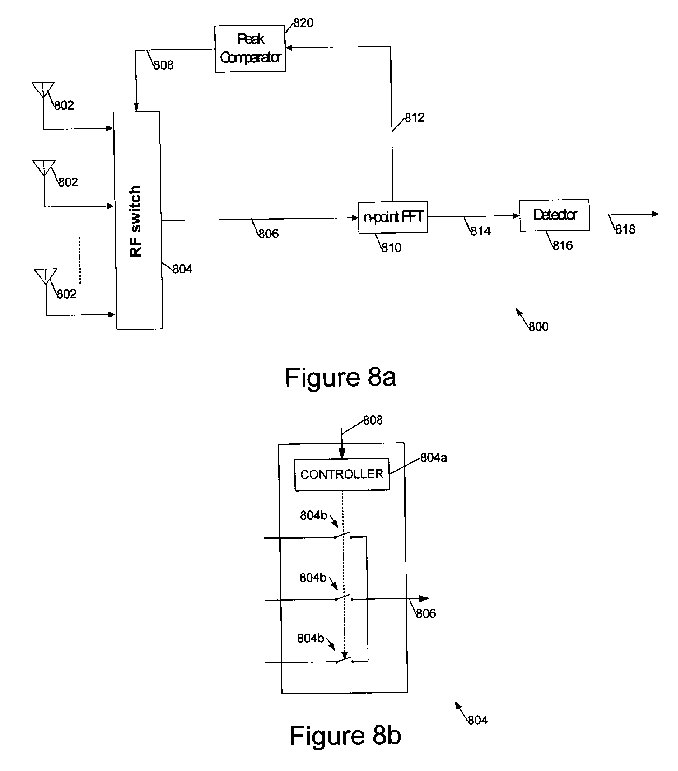

Referring now to figures 8a and 8b, these show an example of a receiver antenna branch selector system 800 which may be employed to implement the above described technique. The plurality of received antennas 802 provide respective inputs to an RF switch 804, optionally via preamplifing and/or filtering circuitry (not shown). RF switch 804 selects one of these signals for output on line 806 in response to an input signal on line 808. The output on line 806 is provided to a N-FFT device 810, which provides and output comprising frequency domain FFT-transformed data on output 812, and which provides a through connection 814 for the input time domain data, to a detector/demodulator at 816, which in turn provides an output 818 for further, baseband processing such as packet identification and decomposition. FFT device 810 may comprise either dedicated hardware or a digital signal processor under control suitable program code, or a hybrid comprising dedicated hardware under software control. As the skilled person will be aware many suitable FFT algorithms and hardware devices are available, this generally being a standard function of a DSP.

The FFT data output 812 is provided to a peak comparator 820 which compares the levels of two (or more) tones within the FFT spectrum of the received signal, for example to determine a value of the difference d in signal level of the main tones as described above with reference to figure 6. It will be appreciated that, for clarity, peak comparator 820 has been drawn as a separate block in the diagram, although in practice this may be implemented in program code on a DSP. Figure 8b shows one embodiment of an RF switch 804b in more detail comprising, in this example, a controller 804a controlling a plurality of switches 804b, such as FET switches, to selectively couple one of the inputs to the output line 806. Depending upon the complexity of the switching scheme, controller 804a may comprise a circuit to store and compare the peak difference values from peak comparator 820 in order to select the antenna branch with the least peak difference. Alternatively controller 804a may implement an more complex algorithm, and may then comprise more complex dedicated logic or a processor operating under control of a control code stored in non-volatile memory. It will be appreciated that any functions implemented by controller 804a may be combined with the peak comparator 820 and FFT 810 functions and implemented by a common processor.

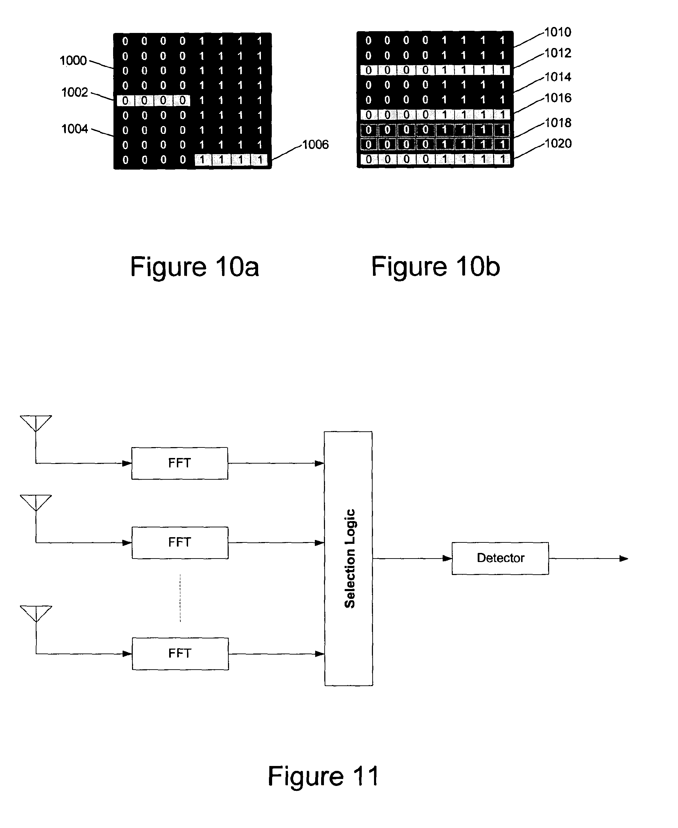

For simplicity figure 8a omits timing signals but the skilled person will understand that these are present in a conventional manner. Thus generally an analogue to-digital conversion stage will be incorporated prior to FFT device 810 operating at an appropriate clock rate. Likewise base band processing (not shown in figure 8a) will generally include a received packet processor configured to identify the packet preamble sequence and other portions of the packet, although the preamble sequence may also be identified by its relatively simple structure at an earlier stage in the received signal chain. The identification of the preamble sequence can be used to define a window for the FFT, as outlined later with reference to figure 10, and to trigger the successive FFT calculations for each antenna branch.

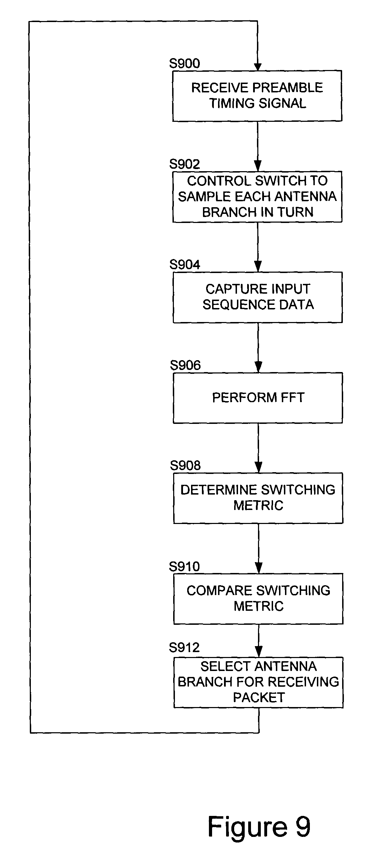

Figure 9 shows a flow diagram illustrating one example of the way in which the circuit of figure 8 may operate. Thus at step S900 the start of the preamble sequence is identified and a preamble timing signal is provided to initiate sequential selection of each antenna branch (S902) in turn for frequency domain analysis. Thus as each successive branch is selected a sequence of input signal data is captured (step S904), FFT is performed (S906) and a switching metric is determined (S908). As previously mentioned the switching metric may comprise a difference in the signal level between two of the tones of the preamble sequence or a combination of this fading metric with other metrics such as signal strength and/or signal-to-noise and interference ratio. Once the metric has been determined for each antenna branch a comparison is performed step S910 and, at step S912, the optimum antenna branch is selected for receiving the packet. The procedure then loops back to step S900, and waits for the preamble of the next packet to begin.

Figures 10a and 10b illustrate an antenna branch switching strategies for two and three antenna branches respectively. Both figures show a preamble sequence comprising 72 (9 x 8 symbols). In figure 10a the first 32 symbols 1000 are provided to the first antenna branch, then a gap of four symbols 1002 is allowed for switching to the second antenna branch, then the next 32 symbols 1004 are provided to the second antenna branch, and a further interval of four symbols 1006 is then provided to allow for switching back to the first antenna branch is necessary. In figure 10b sets of 16 symbols 1010, 1014, 1018 from each of the three antenna branches are processed in turn, each separated by an interval of eight symbols 1012, 1016 and 1020 to allow for switching. In a high rate Bluetooth system the switching interval is one microsecond in figure 10a and two microseconds in figure 10b. The skilled person will appreciate that many other variations along these general lines are available. However there are diminishing returns as the number of antennas is increased above two.

Figure 11 shows an example of an alternative embodiment of a FFT-based diversity receiver analogous to the RSSI-based diversity receiver of figure 1a. Thus in figure 11 an FFT operation for each antenna branch is performed prior to selecting an antenna branch (the outputs from the FFT blocks include both FFT data and timed the main received signal data). The arrangement of figure 11 requires duplication, or at least time division multiplexing, of FFT circuitry or processing but provides a longer FFT interval facilitates monitoring of received signal parameters through the duration of a packet, if desired. The skilled person will appreciate, that broadly speaking, that arrangements analogous known RSSI-based arrangements are possible, although for many applications the arrangement generally indicated by figure 8 will be preferred because of its simplicity. It will be appreciated that more than two receive antennas may be employed in the above described diversity receivers.

In the above described systems the antenna selection determination is performed at the start of reception of the packet and is assumed to be valid for the duration of the packet. The assumption is valid if the packet duration is small relative to the channel coherence time, which can be calculated from the inverse of the Doppler spread. With a pedestrian user of a communications system operating in the ISM (Industrial Scientific and Medical) band at 2.4GHz a typical Doppler frequency is around 6Hz, which results in a coherence time of the order of hundreds of milliseconds. Thus provided that the packet length is of the order of tens of milliseconds the assumption of a correlated channel over the packet duration is valid. However for some applications of high rate Bluetooth this assumption does not hold true, in particular where the transmitter and/or receiver is in a moving vehicle. One example of such an application is the use of Bluetooth high rate for communication between a vehicle and a stationary toll booth, and such a communication channel exhibit low coherence times.

In such a situation an antenna chosen during an initial packet preamble period may be reselected during reception of the packet if the channel variation is large enough to be significant. The initial selection of an antenna is preferably performed according to the above described FFT-based approach but, in other arrangements an RSSI-based method may be employed for initial selection of an antenna as previously described with reference to figures 1a and 1b. Switching from one antenna to another during reception of a packet may either be performed blindly or according to one of the previously described non-blind but more complex methods.

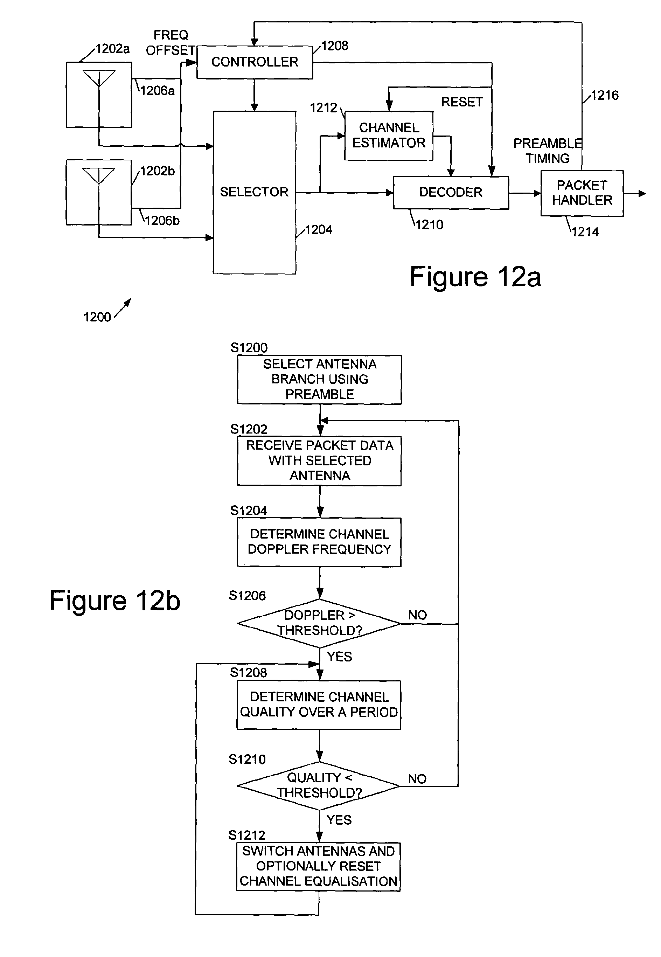

Figure 12a shows an outline block diagram of a Bluetooth High Rate Diversity Receiver 1200 configured for antenna selection during reception of a data packet. Two radio frequency antenna front ends 1202a, 1202b provide respective received signal outputs to a signal selector 1204, and each further provides a frequency offset output signal 1206a, 1206b for example derived by monitoring the phase increment per symbol associated with a frequency offset correction circuit (not shown) in front ends 1202a, b. The frequency offset signals provide one input to a controller 1208 which provides an output signal to selector 1204 to control the selection of a received signal from one of front ends 1202a, b. The selected output signal is provided to a decoder 1210, and to a channel estimator 1212, such as an MLSE estimator, which provides an input to decoder 1210 for channel equalisation. Controller 1208 preferably provides an output to the channel estimator 1212 and, optionally, to the decoder 1210 to reset a channel estimate on switching antennas mid-packet. Decoder 1210 provides the modulated output signal to a packet handler 1214 which recognises the packet structure of figure 1e and extracts the payload data. In the example receiver shown packet handler 1214 also identifies the start of the preamble sequence and provides a preamble timing output 1216 which provides an input to controller 1208 for initial selection of an antenna, for example as previously described.

One mode of operation of the circuit in figure 12a is shown in the flow chart of figure 12e. Thus at step S1200 the receiver selects an antenna branch using preamble data of the data packet, as previously described, and the receiver then begins receiving packet data with the selected antenna (step S1202). During reception of the packet data the receiver, or in the embodiment of figure 12a the controller 1208, determines the Doppler frequency of the channel based upon frequency offset data provided from the receiver front end and, at step S1206 checks whether the frequency is greater than a threshold frequency, for example chosen such that the inverse of the Doppler frequency is comparable with the packet duration. If the Doppler frequency is not greater than the threshold then the procedure loops back to step S1202 and continues to receive data with the selected antenna. If the Doppler frequency is greater than the threshold the procedure continues to step S1208 and the receiver then determines a measure of the quality of received data over a period. Suitable quality measures include a measure of received signal strength and a bit or segment error rate. At step S 1210 a decision is made as to whether or not the quality is less than a permitted threshold; if not the procedure again loops back to step 1202. However a sustained degradation in the quality metric results in the procedure continuing to step S 1212, the receiver thus switching antennas, in the illustrated embodiment of figure 12a performing a blind antenna switch. The procedure then loops back to step S1208 to monitor the performance of the new antenna to determine whether or not the signal quality has improved as, if it has not, the receiver should switch back. In alternative embodiments the receiver front end circuitry and frequency offset correction arrangement may be positioned after selector 1204 in the received signal chain rather than before the selector to achieve a simplification of the receiver since the Doppler frequency for both receive antennas will normally be almost the same.

If an antenna switch occurs mid-packet the channel is changed and hence the channel estimate information determined by channel estimator 1212 is no longer an accurate estimate (the loss in accuracy depends upon the spacing between the receiver antennas and the relative correlation of the channels). Thus where channel equalisation is applied (it may not be applied with this method) the channel memory should be cleared when switching between antennas. This may be referred to as a pseudo-coherent decision directed switching technique. The new antenna signal is preferably monitored to determine whether performance improves, switching back if not.

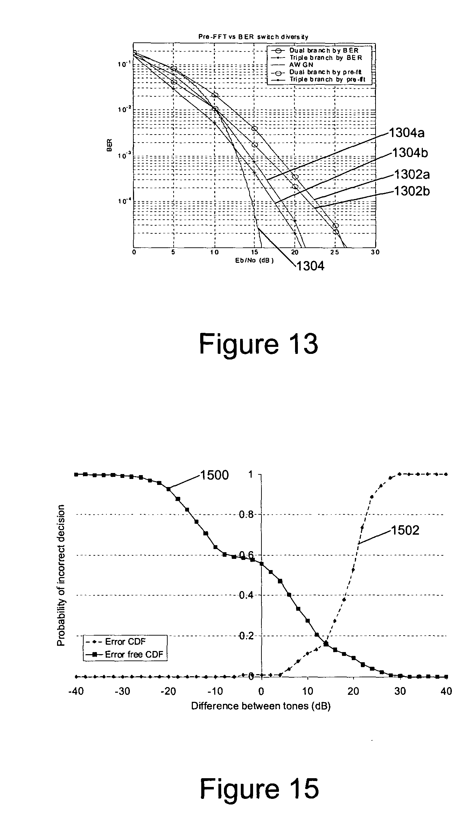

Figure 13 shows a series of curves illustrating performance of the switched diversity receiver of figure 8 in an embodiment in which, at the output of the FFT 810, a decision is based upon the difference in magnitude between the two main peaks (in the frequency domain) for each antenna branch. Thus results of figure 13 relate to the simple example of an "FFT difference only" arrangement. In more detail, figure 13 compared the bit error rate performance of an FFT-based diversity receiver with a theoretically optimal bit error rate (BER) based switching diversity strategy. Thus curves 1302a and b relate to a dual branch diversity receiver and curves 1304a and b represent a triple branch diversity receiver, curves 1302a and 1304a showing the performance of an FFT-based diversity receiver and curves 1302b and 1304b showing the performance of a theoretically optimal receiver. It can be seen that the FFT-based receiver closely approaches theoretical optimal performance. For completeness curve 1306 shows the expected bit error rate of a single antenna receiver in the presence of additive white gaussian noise (AWGN) (for 8PSK). More particularly figure 13 shows that the FFT-based frequency domain switching is about 1dB inferior to the optimal BER-based switching method at a ER of 10⁻⁴ for dual and triple branch diversity, as previously mentioned the optimal techniques switching to the antenna with the lowest BER under all circumstances. According to the normal conventions of such diagrams bit error rate (BER) is shown using a logarithmic scale on the *Y* axis and signal to noise ratio (eb/no in dB) is shown on the *X* axis.

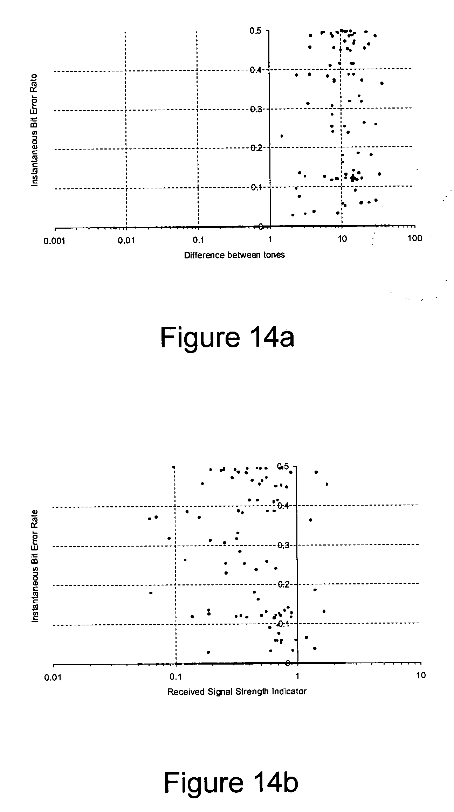

Referring now to figure 14a, this shows a plot of instaneous bit error rate against the difference in signal level to tones in a Bluetooth High Rate preamble sequence, both on a logarithmic scale. The plot of figure 14a was derived from a simulation of a noise free environment with an exponentially decaying impulse response. Inspection of figure 14a shows that with a relative difference between the tones of less than unity (absolute value) no errors are exhibited, although above unity there is little direct relationship between tone signal level difference and bit error rate. This can be compared with the plot of figure 14b which shows instaneous bit error rate against received signal strength (on a logarithmic scale) for the same channel, with the channel gain normalised to unity. In the case of figure 14b there is no discernable RSSI threshold over which no errors occur, which demonstrates that by contrast with tone signal level difference, RSSI cannot be used as an indication of bit errors due to RSSI.

Figure 15 relates to the probability of identifying good, that is error-free, and bad (errored) data packets correctly showing probability on the *Y* axis and the difference in signal level between two tones (in dB) on the X axis. Two curves are shown, curve 1500 relating to good or error-free packets and curve 1502 relating to bad, that is packets with errors. The curves of figure 15 are based upon the results of simulations and were obtained by measuring numbers of error-free packets and packets that included errors.

More particularly the curves of figure 15 show the cumulative probability of an incorrect decisionof a bad packet. For example, if the assumption is made that a difference between the tones of greater than -10dB would always result in an error, the system would correctly determine (and mark as erasures) all errored packets. However, there would be very high probability of incorrectly identifying a error-free packet as errored (64% from Figure 15). With a more realistic value of threshold, one can see that there is a reasonable chance of identifying good (error-free) and bad (errored) packets correctly. For example, if the assumption is made that all packets with a difference greater than 14dB were "bad", the criteria would only be wrong in 17% of instances ( the difference in tone levels is generally less than 14dB for example indoors; the performance is less good with a larger difference). Equally, with all packets with a difference less than 14dB assumed as "good", there would be 16% incorrect classifications.

In a practical system a relative comparison of the tones signal level difference for (two or more) antennas will generally be performed, the antenna (branch) with the smallest difference between the tones being selected. In this situation, where a relative rather than absolute measurement against a threshold is being performed the system will tend to work better than figure 15 suggests since a better/worse measure rather than a good/bad measure is being employed.

Embodiments of the invention have been described in particular reference to Bluetooth High Rate, but the diversity technique, systems and methods described herein may also be applied to other RF data communications systems such as wireless LAN networks (for example IEEE 802.11), and digital mobile phone communication systems. It will be appreciated that the technology is applicable to both mobile terminals and to (network) access points. The skilled person will further appreciate that, more generally, the above described technique may be used in any RF communications system, although they are particularly useful for digital RF communications in the context of which ISI problems arise.

No doubt many other effective alternatives will occur to the skilled person and it will be understood that the invention is not limited to the described embodiments and encompasses modifications apparent to those skilled in the art lying within the spirit and scope of the claims appended hereto.

## Claims

1. An antenna branch selector for selecting for processing at least one of a plurality of antenna branches each coupled to a respective receive antenna and carrying a received signal, said antenna branch selector comprising:
a signal selector having a plurality of inputs to receive signals from said plurality of antenna branches and having an output to output a selected signal for processing;
a time-to-frequency domain converter configured to receive a time domain signal from each of said antenna branches and to provide a corresponding frequency domain output signal; and
a controller coupled to said time-to-frequency domain converter and to said signal selector to control said signal selector to select a said antenna branch responsive to said frequency domain output signal.

2. An antenna branch selector as claimed in claim 1 wherein said controller is configured to select a said antenna branch responsive to a difference between a signal level at a first frequency and a signal level at a second frequency in a said frequency domain output signal for an antenna branch.

3. An antenna branch selector as claimed in claim 2 wherein said first and second frequencies comprise frequencies of said received signal.

4. An antenna branch selector as claimed in claim 3 wherein a said received signal has, in the frequency domain, at least two tones, and wherein said first and second frequencies comprise frequencies of said tones.

5. An antenna branch selector as claimed in claim 4 wherein said received signal comprises a packet data signal including a preamble signal portion, and wherein said tones comprise tones of said preamble signal portion.

6. An antenna branch selector as claimed in claim 5 wherein said received signal comprises a Bluetooth compatible signal.

7. An antenna branch selector as claimed in any one of claims 2 to 6 wherein said controller is configured to select a said antenna branch responsive to a comparison of said difference in signal level for one said antenna branch with said difference in signal level for another said antenna branch.

8. An antenna branch selector as claimed in any one of claims 3 to 7 wherein said controller is further configured to determine an indication of received power for a said antenna branch, and wherein said controller is further configured to select a said antenna branch responsive to said received power indication.

9. An antenna branch selector as claimed in any one of claims 3 to 7 wherein said controller is further configured to select a said antenna branch responsive to a difference between signal levels in said frequency domain signal for an antenna branch at a third frequency comprising a frequency of said received signal and at a fourth frequency comprising a frequency at which substantially no signal level from said received signal is expected.

10. An antenna branch selector as claimed in claim 8 wherein said controller is responsive to a sum of signal levels at a plurality of said third frequencies.

11. An antenna branch selector as claimed in any one of claims 1 to 10 wherein said received signal comprises a packet data signal including a payload signal portion, and wherein said controller is further configured to control said signal selector during said payload signal portion.

12. An antenna branch selector as claimed in claim 11 wherein said controlling of said signal selector during said payload signal portion is conditional upon a Doppler frequency shift of said received signal being greater than a threshold value.

13. A receiver including the antenna branch selector of any preceding claim.

14. Processor control code to, when running implement the antenna branch selector of any one of claims 1 to 12.

15. A method of selecting a received signal from an antenna of antenna system comprising a plurality of antennas, the method comprising:
transforming a received signal from each said antenna from the time domain to the frequency domain;
determining a measure of multipath fading for the signal from each said antenna from said frequency domain transformed signal; and
selecting a received signal responsive to a said determined measure of multipath fading.

16. A method as claimed in claim 15 wherein said determining comprises comparing levels of said received signal at two or more frequencies.

17. A method as claimed in claim 16 wherein said received signal comprises a packet data signal including a preamble portion and wherein said determining is performed during said preamble signal.

18. A method as claimed in claim 17 wherein said two frequencies comprise tones of said preamble signal.

19. A method as claimed in any one of claims 15 to 18 further comprising determining a measure of received signal strength, for the signal from each said antenna from said frequency domain transformed signal, and wherein said selecting is further responsive to a said determined measure of received signal strength.

20. A method as claimed in any one of claims 15 to 18 further comprising determining a measure of received signal to noise and/or interference ratio, for the signal from each said antenna from said frequency domain transformed signal and wherein said selecting is further responsive to said determined measure of received signal to noise and/or interference ration.

21. A method as claimed in claim 17 or 19 wherein said packet data signal includes a payload portion and further comprising monitoring a received signal indicator during reception of said payload portion and selecting a received signal responsive to said monitoring.

22. A method as claimed in claim 21 further comprising monitoring a received signal frequency change parameter, and wherein said selecting of a received signal responsive to said monitoring is responsive to said frequency change parameter.

23. A system for selecting a received signal from an antenna of an antenna system comprising a plurality of antennas, said received signal comprising a packet data signal including preamble and payload signal portions, the system comprising:
means for a received signal parameter measured during said preamble signal;
means for determining a Doppler frequency change of said received signal; and
means for reselecting said received signal during said payload signal conditional upon said determined frequency change being greater than a threshold frequency change.

24. A method of selecting a received signal from an antenna of an antenna system comprising a plurality of antennas; said received signal comprising a packet data signal including preamble and payload signal portions, the method comprising:
a received signal parameter measured during said preamble signal;
determining a Doppler frequency change of said received signal; and
means for reselecting said received signal during said payload signal conditional upon said determined frequency change being greater than a threshold frequency change.

25. A method as claimed in claim 24 wherein said threshold frequency change is dependent upon the duration of a said packet.
